# EUROPÄISCHE PATENTSCHRIFT

(11) **EP 1 345 845 B1**
(45) Veröffentlichungstag und Bekanntmachung des Hinweises auf die Patenterteilung: **15.09.2004**
(21) Anmeldenummer: 01271979.5
(22) Anmeldetag: 26.10.2001
(51) Int. Cl.: C01B 15/00

(54) **VERFAHREN ZUR ERHÖHUNG DER INNEREN STABILITÄT VON NATRIUMPERCARBONAT**
METHOD FOR INCREASING THE INNER STABILITY OF SODIUM PERCARBONATE
PROCEDE PERMETTANT D'AUGMENTER LA STABILITE INTERNE DU PERCARBONATE DE SODIUM

(30) Priorität: 23.12.2000 DE 10065953
(43) Veröffentlichungstag der Anmeldung: 24.09.2003
(73) Patentinhaber: Degussa AG, 40474 Düsseldorf (DE)
(72) Erfinder: JAKOB, Harald, 63594 Hasselroth (DE); HESSBERGER, Waldemar, 63755 Alzenau (DE); KAISER, Lothar, 79618 Rheinfelden (DE); LATTICH, Jürgen, 61130 Nidderau (DE); OVERDICK, Ralph, 65719 Hofheim (DE)
(86) Internationale Anmeldenummer: PCT/EP2001/012446
(87) Internationale Veröffentlichungsnummer: WO 2002/051745

(56) Entgegenhaltungen:
- EP-A- 0 396 175
- US-A- 4 020 148
- US-A- 4 193 977
- DATABASE WPI Section Ch, Week 198006 Derwent Publications Ltd., London, GB; Class A97, AN 1980-10367C XP002194201 & JP 54 163906 A (KAO SOAP CO LTD), 27. Dezember 1979 (1979-12-27)

## Beschreibung

Die Erfindung richtet sich auf ein Verfahren zur Erhöhung der inneren Stabilität von Natriumpercarbonat. Unter den Begriff "Natriumpercarbonat" wird nachfolgend sowohl nicht-umhülltes teilchenförmiges Natriumpercarbonat als auch mit einer oder mehreren stabilisierend wirkenden Hüllschichten umhülltes teilchenförmiges Natriumpercarbonat verstanden.

Die Sicherheit bei der Lagerung von Natriumpercarbonat in Schüttgutbehältern erfordert aufgrund der selbstzersetzlichen Eigenschaften besondere Aufmerksamkeit. Um einen exothermen Zerfall von Natriumpercarbonat zu Soda, Wasser und Sauerstoff zu vermeiden, wurden von der Fachwelt große Anstrengungen unternommen, Natriumpercarbonat mit einer möglichst hohen Lagerstabilität zu erzeugen.

Der Begriff Natriumpercarbonat im Zusammenhang mit dem erfindungsgemäßen Verfahren umfasst sowohl nicht-umhülltes Natriumpercarbonat, das nach einem beliebigen Verfahren hergestellt wurde, beispielsweise nach einem Kristallisations- oder einem Wirbelschicht-Sprühgranulationsverfahren, als auch umhülltes Natriumpercarbonat mit einer oder mehreren stabilisierenden Hüllschichten, wobei die Hüllschichten eine oder mehrere stabilisierend wirkende Komponenten enthalten können, wie beispielsweise Alkalisulfate, Natriumcarbonat, Natriumbicarbonat, Wasserglas, Borate und Perborate, Magnesiumsulfat, Magnesiumsalze von Carbonsäuren.

Es ist bekannt, Natriumpercarbonat zum Zwecke der Stabilisierung des Produktes in Gegenwart von Waschmittelbestandteilen, wie Zeolithen, mit einer oder mehreren stabilisierend wirkenden Hüllschichten zu umgeben, jedoch hat diese Umhüllung nur einen begrenzten Einfluss auf die selbstzersetzlichen Eigenschaften von Natriumpercarbonat. Die selbstzersetzlichen Eigenschaften lassen sich in gewissem Umfang durch den Einsatz von Stabilisatoren, wie Mg-Salzen und Wasserglas, bei der Herstellung von Natriumpercarbonat zwar vermindern, jedoch ist eine weitere Stabilitätserhöhung wünschenswert, um die Lagerfähigkeit von Natriumpercarbonat zu verbessern.

Die JP-Offenlegungsschrift 57-42510 lehrt ein Verfahren zur Lagerung von Natriumpercarbonat, wobei im Lagerbehälter bei einer relativen Feuchtigkeit von höchstens 70 % Kühlluft mit einer Temperatur, die maximal in Höhe normaler Raumtemperatur liegt, zugeführt wird und bei der Kühlung der Natriumpercarbonatteilchen gleichzeitig die Atmosphäre im Lagerbehälter durch die jeweilige Kühlluft ersetzt wird. Ziel dieses Verfahrens ist es, Natriumpercarbonat, das mit erhöhter Temperatur aus einem Trockner in den Lagerbehälter überführt wird und sich damit in einer Atmosphäre mit hoher relativer Luftfeuchtigkeit befindet, zu stabilisieren. Durch das Durchleiten von Kühlluft durch das im Silo gelagerte Produkt kommt es zu einer Abkühlung des Siloinhalts und gleichzeitig wird der Wassergehalt herabgesetzt. Auf diese Weise werden die Lagerfähigkeit bei erhöhter Luftfeuchte erhöht und die Neigung zum Zusammenklumpen vermindert. Es besteht aber dennoch Bedarf an einer weiteren Stabilitätserhöhung. Diesem Dokument lassen sich aber keine Anregungen entnehmen, wie die innere Stabilität, gemessen beispielsweise durch den sogenannten TAM-Wert, weiter erhöht werden kann.

Das EP-Patent 0 396 175 B1 richtet sich auf ein Verfahren zur Haltbarmachung von Natriumperboratmonohydrat-Körnchen, das in einem dichten Raum zwischen 10 und 65 °C in loser Schüttung gelagert wird. Hierbei wird während der gesamten Dauer der Lagerung trockene Luft durch das Lagergut geleitet. Der Taupunkt der trockenen Luft soll hierbei insbesondere unterhalb -20 °C und die Menge an trockener Luft zwischen 1 und 8 Nm³/(h · t_{NaPb}) liegen. Dieses Dokument gibt keine Anregung, das Verfahren auch auf die Lagerung von Natriumpercarbonat zu übertragen. Nachteile dieses Verfahrens sind, dass während der gesamten Lagerzeit trockene Luft mit einem sehr niedrigen Taupunkt in großer Menge durch das Lagergut geleitet werden muss. Hinweise, ob die innere Stabilität erhöht wird, lassen sich dem Dokument nicht entnehmen.

Die innere Stabilität von nicht-umhülltem und umhülltem Natriumpercarbonat lässt sich durch den sogenannten TAM-Wert darstellen, wobei die Stabilität mit abnehmendem TAM-Wert zunimmt. Bei dem TAM-Wert handelt es sich um eine mikrokalorimetrische Bestimmung der Energiefreisetzung bei der Lagerung, bestimmt mittels TAM® Thermal Activity Monitor der Fa. Thermometric AB, Järfälla (SE). Eine gute Lagerfähigkeit wird durch einen niedrigen TAM-Wert dargestellt - vorzugsweise sollte der TAM-Wert unter 10 µW/g und insbesondere unter 8 µW/g liegen.

Aufgabe der Erfindung ist es demgemäß, ein Verfahren bereitzustellen, womit die innere Stabilität von Natriumpercarbonat gegenüber jener erhöht werden kann, welche im Rahmen eines üblichen Herstellungsverfahrens, umfassend die Umsetzung von Wasserstoffperoxid mit Soda und Trocknung des teilchenförmigen Produkts, erhalten wird. Gemäß einer weiteren Aufgabe sollte das Verfahren in einfacher Weise durchführbar sein; gemäß einer wünschenswerten aber nicht obligatorischen Aufgabe sollte das Verfahren in Vorrichtungen durchführbar sein, welche ohnehin im Rahmen des Herstellverfahrens zur Anwendung gelangen.

Diese Aufgabe sowie weitere Aufgaben, wie sie sich aus der folgenden Beschreibung ergeben, werden durch das erfindungsgemäße Verfahren gelöst. Gegenstand der Erfindung ist somit ein Verfahren zur Erhöhung der inneren Stabilität von Natriumpercarbonat, umfassend eine Nachbehandlung von umhülltem oder nicht-umhülltem teilchenförmigen Natriumpercarbonat, das dadurch gekennzeichnet ist, dass man das teilchenförmige trockene Natriumpercarbonat mindestens 2 Minuten bei einer Temperatur im Bereich von 70 bis 120 °C behandelt, wobei die die Teilchen umgebende Luft zum Zwecke der Konstanthaltung oder Erniedrigung der Feuchte während der Behandlung ausgetauscht wird. Die Unteransprüche richten sich auf bevorzugte Ausführungsformen des erfindungsgemäßen Verfahrens.

Gemäß einer bevorzugten Ausführungsform wird die thermische Behandlung des teilchenförmigen Natriumpercarbonats bei einer Temperatur im Bereich von 80 bis 95 °C, insbesondere von 85 bis 95 °C, durchgeführt. Die Behandlungsdauer liegt vorzugsweise im Bereich von 5 bis 60 Minuten, insbesondere 10 bis 60 Minuten. Bei einer Temperatur oberhalb 95 bis 120 °C liegt die Behandlungsdauer im unteren Bereich. Der Fachmann wird durch orientierende Versuche die optimalen Bedingungen ermitteln; diese hängen von der Art der Herstellung als auch von der Feuchte der Luft und der Intensität des Luftaustauschs ab.

Entgegen der allgemein vorherrschenden Meinung, wonach der Aktivsauerstoffgehalt von Natriumpercarbonat bei zunehmender Temperatur und Einwirkungszeit absinkt und deshalb solche Bedingungen möglichst vermieden werden, wurde überraschenderweise gefunden, dass unter den erfindungsgemäßen Bedingungen der Aktivsauerstoffgehalt nahezu konstant bleibt, gleichzeitig aber der TAM-Wert deutlich absinkt, wodurch die innere Stabilität erhöht und die Lagerbeständigkeit verbessert werden. Es wird angenommen, dass diese Stabilisierung u.a. darauf zurückzuführen ist, das Störstellen im Gitter abgebaut werden.

Das erfindungsgemäße Verfahren lässt sich auf teilchenförmiges Natriumpercarbonat anwenden, das nach einem beliebigen Verfahren hergestellt und/oder umhüllt wurde. Die gängigen Herstellungsverfahren umfassen die Stufe der Umsetzung von Wasserstoffperoxid mit Soda und eine Trocknungsstufe, um das bei der Umsetzung anwesende Wasser abzutrennen.

Beispielhaft wird auf das Kristallisationsverfahren gemäß US-Patent 4,146,571 verwiesen, wobei Wasserstoffperoxid und Soda in einer Kochsalz enthaltenden Mutterlauge umgesetzt werden. Nach der Kristallisation, welche zum Zwecke des Erhalts eines möglichst niedrigen TAM-Wertes in Gegenwart von Mg-Ionen durchgeführt wird, wird das Natriumpercarbonat in einer üblichen Vorrichtung zur Fest-Flüssig-Trennung von der Mutterlauge abgetrennt und dann in einem Trockner, wie einem Wirbelschichttrockner, getrocknet.

Ein alternatives Herstellungsverfahren ist das sogenannte Wirbelschicht-Sprühgranulationsverfahren, bei welchem eine wässrige Wasserstoffperoxidlösung und eine wässrige Sodalösung oder Suspension in eine Wirbelschicht gesprüht werden, welche Natriumpercarbonatpartikel enthält, deren Durchmesser kleiner ist als derjenige der herzustellenden Partikel. Während des Einsprühens der in wässrigem Medium befindlichen Reaktionspartner wird Wasser bei einer Wirbelschichttemperatur im Bereich von 40 bis 95 °C verdampft. Nach Beendigung des Sprühprozesses wird das Wirbelschichtgut abgekühlt. Beispielhaft wird auf das DE-Patent 43 29 205 verwiesen.

Schließlich sind auch Herstellungsverfahren bekannt, wobei eine wässrige Wasserstoffperoxidlösung auf pulverförmiges Soda aufgebracht wird; auch hier schließt sich an die Umsetzung eine Trocknungsstufe an.

Auch im Falle der Beschichtung von Natriumpercarbonat mit einer Hüllkomponenten enthaltenden wässrigen Lösung, was meistens in einer Wirbelschicht erfolgt, wird das eingebrachte Wasser in der Wirbelschicht verdampft und auf diese Weise ein umhülltes Natriumpercarbonat erhalten.

Das erfindungsgemäße Verfahren setzt demgemäß vorzugsweise an der Stelle ein, wo die gängigen Herstellungs- und Umhüllungsverfahren enden. Demgemäß wird die erfindungsgemäße thermische Behandlung vorzugsweise in einer fluidisierten Schicht durchgeführt, wobei während der Behandlung zur Einstellung und Aufrechterhaltung der Behandlungstemperatur entsprechend aufgeheizte Luft durch die fluidisierte Schicht geleitet wird. Bei der auf die Behandlungstemperatur erwärmten Luft handelt es sich entweder um atmosphärische Luft oder atmosphärische Luft, welche mittels Rauchgasen direkt erwärmt wurde; bevorzugt wird eine Luft mit niedrigem Feuchtegehalt. Unter dem Begriff "fluidisierte Schicht" werden alle Zustände verstanden, unter welchen die auf Behandlungstemperatur erhitzte Luft durch eine Schicht aus teilchenförmigem Natriumpercarbonat geleitet werden kann. Sofern das Natriumpercarbonat ausreichend granulatförmig ist, kann die Behandlung auch unterhalb des Lockerungspunktes der Schicht erfolgen.

Sofern sich die erfindungsgemäße Behandlung unmittelbar an die Trocknungsstufe des Herstellungsprozesses anschließt und diese in einer Wirbelschichtvorrichtung erfolgt, wird die erfindungsgemäße Behandlung zweckmäßigerweise gleichfalls unmittelbar im Anschluss an die Trocknungsstufe in einer Wirbelschicht durchgeführt.

Wie sich aus den Beispielen ergibt, ist es durch das erfindungsgemäße Verfahren möglich, den TAM-Wert von Natriumpercarbonat deutlich zu erniedrigen; üblicherweise liegt die Erniedrigung im Bereich von 20 bis 50 % des Ausgangswerts, teilweise auch darüber.

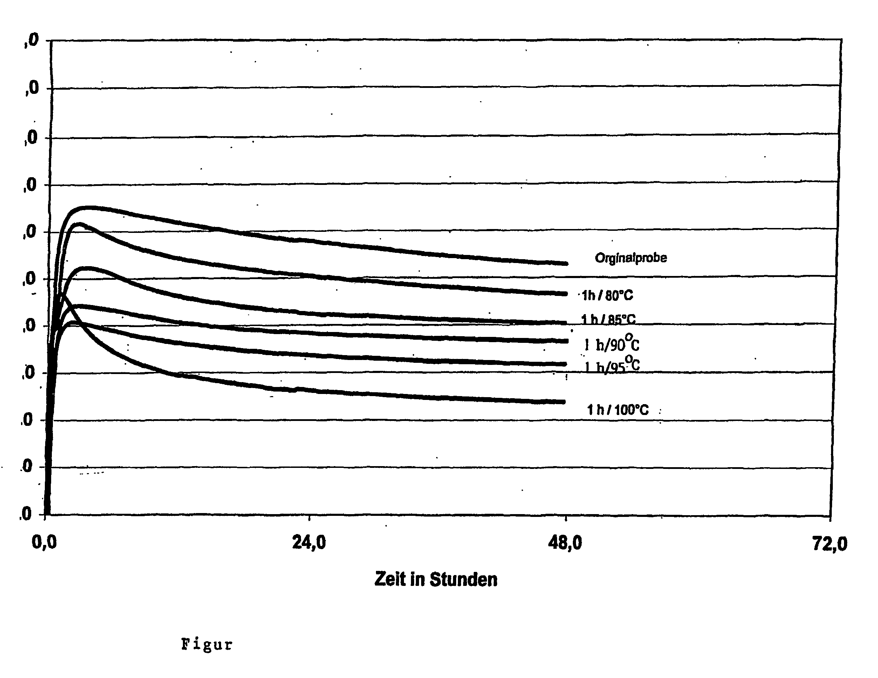

Die Figur zeigt den Verlauf der TAM-Messung von Natriumpercarbonat, das bei unterschiedlicher Temperatur in einer Laborwirbelschichtanlage nachbehandelt wurde. Die TAM-Messung erfolgte mittels des Thermo-Aktivator-Monitors der Fa. Thermometric AB, Spjutvägen 5a, S-175 61, Järfälla; die Messung erfolgte während 48 h Lagerung bei 40 °C in einer Messküvette.

Wesentliche Vorteile des erfindungsgemäßen Verfahrens bestehen darin, dass in einfacher Weise die innere Stabilität, ausgedrückt durch den TAM-Wert, erhöht werden kann. In der bevorzugten Ausführungsform erfolgt die thermische Behandlung in einer fluidisierten Schicht, wie sie bereits im Rahmen einer Trocknung als letzter Stufe eines Herstellung- oder Beschichtungsverfahrens zur Anwendung gelangt.

### Beispiele 1 bis 5

Erfindungsgemäße Behandlung von mit Natriumsulfat beschichtetem Natriumpercarbonat. Das erfindungsgemäße Verfahren wurde in einem Laborwirbelschichttrockner durchgeführt. Zur Erzeugung der Wirbelschicht wurde entsprechend aufgewärmte atmosphärische Luft verwendet; es wurde jeweils 1 h thermisch behandelt. Die Temperaturen der Wirbelschicht, die Aktivsauerstoffwerte (Oa %), die mittels einer IR-Waage bestimmten Werte für den Gewichtsverlust (Gew.-%) sowie die ermittelten TAM-Werte folgen aus der Tabelle.

**Tabelle:**

| Nr. | T (°C) | Oa (%) | Gew.-Verlust (%) (IR-Waage) | TAM-Wert (µW/g) |
|---|---|---|---|---|
| Start | | 13,7 | 1,3 | 10,6 |
| 1 | 80 | 13,7 | 1,0 | 9,3 |
| 2 | 85 | 13,7 | 0,8 | 8,1 |
| 3 | 90 | 13,6 | 1,0 | 7,3 |
| 4 | 95 | 13,5 | 1,1 | 6,3 |
| 5 | 100 | 13,0 | 1, 5 | 4,8 |

### Beispiel 6

Ein in einer Labor-Wirbelschicht-Sprühgranulationsanlage erzeugtes nicht-umhülltes Natriumpercarbonät-Wirbelschichtgranulat mit einem Oa-Wert von 13,5 % und einem TAM-Wert von 7,5 µW/g wurde in einer Wirbelschicht erfindungsgemäß behandelt: Nach Eintrag des Granulats in den Wirbelschichttrockner wurde zunächst eine Wirbelschichttemperatur von 100 °C eingestellt, diese stieg aber für einen Zeitraum von 2 Minuten auf 120 °C. Nach Versuchsende wies das Produkt einen Oa-Gehalt von 13,58 Gew.-% und einen TAM-Wert von 5,5 µW/g auf.

## Patentansprüche

1. Verfahren zur Erhöhung der inneren Stabilität von Natriumpercarbonat, umfassend eine Nachbehandlung von umhülltem oder nicht-umhülltem teilchenförmigen Natriumpercarbonat,
**dadurch gekennzeichnet,**
**dass** man das teilchenförmige trockene Natriumpercarbonat mindestens 2 Minuten bei einer Temperatur im Bereich von 80 bis 100 °C behandelt, wobei die die Teilchen umgebende Luft zum Zwecke der Konstanthaltung oder Erniedrigung der Feuchte während der Behandlung ausgetauscht wird und wobei der Aktivsauerstoffgehalt nahezu konstant bleibt.

2. Verfahren nach Anspruch 1,
**dadurch gekennzeichnet,**
**dass** man die Behandlung bei einer Temperatur im Bereich von 85 bis 95 °C, durchführt.

3. Verfahren nach Anspruch 1 oder 2,
**dadurch gekennzeichnet,**
**dass** man die Behandlung während einer Dauer im Bereich von 5 bis 60 Minuten, insbesondere 10 bis 60 Minuten, durchführt.

4. Verfahren nach einem der Ansprüche 1 bis 3,
**dadurch gekennzeichnet,**
**dass** man die Behandlung in einer fluidisierten Schicht durchführt, wobei auf die Behandlungstemperatur erwärmte atmosphärische oder mittels Rauchgasen direkt erwärmte atmosphärische Luft durch die fluidisierte Schicht durchgeleitet wird.

5. Verfahren nach einem der Ansprüche 1 bis 4,
**dadurch gekennzeichnet,**
**dass** man die Behandlung unmittelbar im Anschluss an eine sich an die Herstellung und/oder Umhüllung von Natriumpercarbonat anschließende Trocknungsstufe in einer Wirbelschicht durchführt.

6. Verfahren nach einem der Ansprüche 1 bis 5,
**dadurch gekennzeichnet,**
**dass** man die thermische Behandlung nach einer Umhüllung des Natriumpercarbonats mit Natriumsulfat als Hüllkomponente durchführt.

7. Verfahren nach einem der Ansprüche 1 bis 6,
**dadurch gekennzeichnet,**
**dass** man ein durch Wirbelschicht-Sprühgranulation hergestelltes nicht-umhülltes oder umhülltes Natriumpercarbonat thermisch behandelt.

## Claims

1. Process for improving the internal stability of sodium percarbonate, comprising a post-treatment of coated or uncoated particulate sodium percarbonate, **characterised in that** the particulate dry sodium percarbonate is treated for at least 2 minutes at a temperature in the range from 80 to 100 °C, wherein the ambient air surrounding the particles is replaced during the treatment in order to reduce or maintain the moisture at a constant level, and wherein the active oxygen content remains virtually constant.

2. Process according to claim 1, **characterised in that** the treatment is carried out at a temperature in the range from 85 to 95 °C.

3. Process according to claim 1 or 2, **characterised in that** the treatment is carried out for a period ranging from 5 to 60 minutes, in particular 10 to 60 minutes.

4. Process according to one of claims 1 to 3, **characterised in that** the treatment is carried out in a fluidised layer, wherein atmospheric air heated to the treatment temperature or atmospheric air directly heated by means of flue gases is passed through the fluidised layer.

5. Process according to one of claims 1 to 4, **characterised in that** the treatment is carried out in a fluidised bed immediately following a drying stage subsequent to the production and/or coating of sodium percarbonate.

6. Process according to one of claims 1 to 5, **characterised in that** the thermal treatment is carried out after a coating of the sodium percarbonate with sodium sulfate as coating component.

7. Process according to one of claims 1 to 6, **characterised in that** an uncoated or coated sodium percarbonate produced by fluidised bed spray granulation is thermally treated.

## Revendications

1. Procédé destiné à augmenter la stabilité interne de percarbonate de sodium, comprenant un post-traitement de percarbonate de sodium particulaire enrobé ou non enrobé,
**caractérisé en ce qu'**
on traite le percarbonate de sodium sec, particulaire, pendant au moins 2 minutes à une température se situant dans une plage de 80 à 100°C, l'air entourant les particules étant renouvelé dans le but de maintenir constante ou d'abaisser l'humidité pendant le traitement et la teneur en oxygène actif restant à peu près constante.

2. Procédé selon la revendication 1,
**caractérisé en ce qu'**
on effectue le traitement à une température se situant dans une plage de 85 à 95°C.

3. Procédé selon la revendication 1 ou 2,
**caractérisé en ce qu'**
on effectue le traitement pendant une durée se situant dans une plage de 5 à 60 minutes, en particulier 10 à 60 minutes.

4. Procédé selon l'une quelconque des revendications 1 à 3,
**caractérisé en ce qu'**
on effectue le traitement dans une couche fluidisée, de l'air atmosphérique chauffé à la température de traitement ou de l'air atmosphérique chauffé directement au moyen des gaz de fumée circulant en continu à travers la couché fluidisée.

5. Procédé selon l'une quelconque des revendications 1 à 4,
**caractérisé en ce qu'**
on effectue le traitement en couche fluidisée directement à la suite d'une étape de séchage faisant suite à la fabrication et/ou à l'enrobage de percarbonate de sodium.

6. Procédé selon l'une quelconque des revendications 1 à 5,
**caractérisé en ce qu'**
on effectue le traitement thermique après un enrobage du percarbonate de sodium avec du sulfate de sodium comme composant d'enrobage.

7. Procédé selon l'une quelconque des revendications 1 à 6,
**caractérisé en ce qu'**
on soumet à un traitement thermique un carbonate de sodium non enrobé ou enrobé fabriqué par granulation par pulvérisation en couche fluidisée.
